# EUROPÄISCHE PATENTSCHRIFT

(11) **EP 1 848 667 B1**
(45) Veröffentlichungstag und Bekanntmachung des Hinweises auf die Patenterteilung: **07.04.2010**
(21) Anmeldenummer: 06706877.5
(22) Anmeldetag: 11.02.2006
(51) Int. Cl.: C02F 5/04, B01J 2/04, B01D 1/16, C01B 25/34

(54) **VERWENDUNG VON MAGNESIUMPHOSPHAT ZUR WASSERENTHÄRTUNG**
USE OF MAGNESIUMPHOSPHATE FOR SOFTENING WATER
L'UTILISATION DE PHOSPHATE DE MAGNÉSIUM POUR ADOUCIR L'EAU

(30) Priorität: 14.02.2005 DE 102005007922
(43) Veröffentlichungstag der Anmeldung: 31.10.2007
(73) Patentinhaber: WP Engineering Limited, Valletta VLT05 (MT)
(72) Erfinder: JOHANN, Jürgen, A-5310 Mondsee (AT)
(74) Vertreter: Pfiz, Thomas
(86) Internationale Anmeldenummer: PCT/EP2006/001264
(87) Internationale Veröffentlichungsnummer: WO 2006/084751

(56) Entgegenhaltungen:
- WO-A-02/076577
- DE-A1- 4 009 082
- US-A- 2 262 745
- US-A- 5 776 348

## Beschreibung

Die Erfindung betrifft ein Verfahren zur Wasserenthärtung, bei dem ein Inhibitor zur Verzögerung der Ausfällung eines Härtebildners dem zu enthärtenden Wasser zugesetzt wird, eine Vorrichtung zur Wasserenthärtung mit einem einen Inhibitor enthaltenden, vom zu enthärtenden Wasser durchströmten Gefäß sowie ein Granulat und ein Verfahren zur Herstellung eines Granulats.

In vielen Wasser führenden Systemen bzw. technischen Geräten führt die Bildung von insbesondere kalkhaltigen Inkrustierungen zu großen Schäden. Meistens entsteht dabei Calciumcarbonat nach folgender Gleichung:

Ca + 2 HCO₃ ↔ CaCO₃ + H₂O + CO₂

Die damit verbunden Schäden sind unterschiedlichster Natur. So führt zum Beispiel die Belagbildung in Rohrleitungen zu einem Anstieg des Druckverlustes und in Wärmetauschern zu höherem Energiebedarf. In Absperreinrichtungen wie Ventilen, Schiebern, etc. kann es durch Inkrustierungen zum Funktionsausfall kommen.

Die bekannten Verfahren zur Verhinderung der Steinbildung lassen sich in zwei wesentliche Kategorien einteilen: Abtrennung der Härtebildner vom Wasser einerseits und Hemmung des Kristallwachstums durch Zugabe von Inhibitoren andererseits. Die vorliegende Erfindung befasst sich mit der Hemmung des Kristallwachstums durch Inhibieren der Keimbildung.

Verfahren bzw. Vorrichtungen zur Inhibierung der Keimbildung sind einfach im Aufbau und erfordern folglich geringe Investitionskosten. Dies gilt insbesondere im Vergleich zu Verfahren bzw. Vorrichtungen zur Abtrennung der Härtebildner aus dem Wasser. Aufgabe der Inhibitoren ist es das beginnende Keimwachstum von Härtebildnern zu hemmen, so dass letztendlich keine größeren Agglomerate entstehen können. Inhibitoren wirken meist nach dem sog. "Threshold-Effekt", wobei eine unterstöchiometrische Menge des Inhibitors das Keimwachstum, bzw. die Kinetik des Wachstums, hemmt. Hierbei findet eine Adsorption des Inhibitors am Kristallkeim statt. Im Falle von Phosphaten wird ein Phosphat-Anion am Calciumcarbonat-Kristall angelagert. Dadurch wird lokal ein Carbonat-Ion durch ein Phosphat-Ion substituiert. In Folge wird auf Grund der unterschiedlichen elektrischen Ladung beider Ionen das Kristallwachstum gestört, was zu einer Verzögerung oder zum Abbruch des Wachstums führen kann.

Zur Inhibierung der Keimbildung werden zu dem zu behandelnden Wasser die Inhibitorchemikalien gegeben. Dies geschieht im Stand der Technik mittels einer Dosierstation, welche im Wesentlichen aus einem Vorratsbehälter und einer Dosierpumpe besteht. Dem vorbeiströmenden Wasser werden über eine Impfstelle die Inhibitorchemikalien zudosiert, und zwar in einer Menge, die proportional zur Wassermenge ist. Als Inhibitoren werden meist Polyphosphate, zum Beispiel Natriumhexametaphosphat, oder Phosphonsäuren zudosiert. Zur Inhibierung der Keimbildung werden diese Substanzen ausschließlich in Natrium- oder Kaliumform verwendet. Für Prozesswasser werden u. a. Polycarboxylate zugesetzt. Als Korrosionsschutz werden ggf. auch Orthophosphate beigefügt. In der Literatur wurde bereits vorgeschlagen, Natrium- oder Kaliumorthophosphate auch zum Enthärten von Wasser einzusetzen. Problematisch hierbei ist allerdings die Gefahr der Schlammbildung.

Weitere Nachteile der Inhibierung sind zum einen der hohe Verbrauch an Chemikalien und zum anderen der bereits erwähnte Einsatz von Dosierstationen, bei welchen nahezu offene Vorratsbehälter mit Stagnationswasser eingesetzt werden. Dies birgt die Gefahr der Verkeimung der Dosierstationen in sich.

Eine weitere Möglichkeit der Dosierung von Polyphosphaten sind so genannte Phosphatschleusen. Die Schleuse besteht aus einem durchströmten Behälter, in welchem sich ein sich langsam lösendes Polyphosphat, meist in Form von Kugeln, befindet. Die Phosphatschleuse wird vom Wasser durchströmt und gibt dabei Polyphosphat ab. Auf Grund der äußerst ungenauen Dosierung sind die sich einstellenden Phosphatkonzentrationen sehr hoch, so dass diese Schleusen zur Trinkwasseraufbereitung nicht geeignet sind. Im Trinkwasser ist die Zudosierung von Phosphaten mit max. 5 ppm erlaubt.

Problematisch ist auch die Dosierung von Phosphaten bei der Behandlung von Warmwasser. Aufgrund der erhöhten Temperaturen gast CO₂ aus, und das Gleichgewicht zwischen Calciumhydrogencarbonat und Calciumcarbonat wird zur Seite des Calciumcarbonats verschoben, so dass die Keimbildung erhöht wird. Bei gleich bleibender Dosierung besteht die Gefahr, dass die Härtebildner in nicht ausreichendem Maß entfernt werden.

Ein Nachteil ist ferner der temperaturlimitierte Einsatz der im Stand er Technik eingesetzten Phosphate, welche nur bis zu einer Temperatur von max. 65°C ihre Wirkung zeigen. Bei höheren Temperaturen kommt es zur Ausfällung der Härtebildner und folglich zur unerwünschten Schlammbildung insbesondere in Warmwassererzeugern und Wärmetauschern.

Das Dokument DE-A1-40 09 082 beschreibt ein Verfahren zur Abwasserreinigung, wobei Ammonium- und Phosphatverbindungen beseitigt werden sollen. Dieses Dokument offenbart allerdings nichts in Richtung einer Trink- oder Brauchwasserbehandlung, woraus die die technische Wirkung einer verzögerten Ausfällung von Härtebildnern erkennbar wäre.

Aufgabe der vorliegenden Erfindung ist es nun, ein Verfahren und eine Vorrichtung der o. g. Art zu beschreiben, bei welchem diese Nachteile nicht auftreten.

Die Lösung besteht in einem Verfahren mit den Merkmalen des Anspruchs 1. Erfindungsgemäß ist vorgesehen, dass als Inhibitor tertiäres Magnesiumphosphat Mg₃(PO₄)₂ (im Folgenden: Trimagnesiumphosphat) in Form eines Feststoffes zur Verzögerung der Ausfällung eines Härtebildners verwendet wird

In vielen Untersuchungen konnte überraschenderweise festgestellt werden, dass eine hervorragende Keiminhibierung mit tertiärem Magnesiumphosphat Mg₃(PO₄)₂ (im Folgenden: Trimagnesiumphosphat) erreicht werden kann. Bei den üblichen Inhibitoren auf Phosphatbasis wird eine Konzentration von bis zu 5 ppm benötigt (also an der Grenze des bei Trinkwasser Erlaubten), um eine Keimbildung zu vermeiden. Demgegenüber reicht bei erfindungsgemäßer Verwendung von Trimagnesiumphosphat je nach Wasserzusammensetzung eine Konzentration von 0,1 bis 0,5 ppm aus, um die Keimbildung nahezu vollständig zu vermeiden.

Da das Trimagnesiumphosphat nur langsam verbraucht wird, ist die erfindungsgemäße Lösung besonders kostengünstig.

Trimagnesiumphosphat ist in Wasser nahezu unlöslich. Es liegt als Feststoff vor und wird von dem zu enthärtenden Wasser kontaktiert. Dabei erhält man im zu enthärtenden Wasser eine Phosphatkonzentration von 0,1 bis 0,5 ppm, welche eine ausreichend inhibierende Wirkung für Härtebildner hat. Die geringe Löslichkeit von Trimagnesiumphosphat in Wasser ist also überraschenderweise völlig ausreichend für den erfindungsgemäßen Zweck, während bspw. Tricalciumphosphat eine zu geringe Löslichkeit aufweist.

Der große Vorteil dieses Verfahrens ist die Zudosierung des Inhibitors ohne Dosierpumpe und Impfstelle. Des Weiteren erfolgt die Dosierung aus einem geschlossenen System heraus, was schon aus hygienischen Gründen vorteilhaft gegenüber klassischen Dosierstationen ist.

Ein weiterer Vorteil von Trimagnesiumphosphat ist die Wirkung bei gegenüber dem Stand der Technik hohen Temperaturen von bis über 90°C. Versuche mit Trimagnesiumphosphat zeigen eine Reduzierung der Keimbildung bei 90°C um mehr als 98 %, bei einer Konzentration von max. 0,3 ppm.

Vorteilhafte Weiterbildungen ergeben sich aus den Unteransprüchen. Das Trimagnesiumphosphat wird bevorzugt in Form eines leicht handhabbaren Granulats eingesetzt, bspw. mit einer Körnung von 0,2 bis 5,0 mm. Das in fester Form vorliegende Trimagnesiumphosphat wird vorteilhafterweise als Schüttung oder im Festbett eingesetzt, so dass es vom zu enthärtenden Wasser ganz oder teilweise durchströmt werden kann. Die Durchströmung sorgt für eine gleichmäßige, kontrollierbare Dosierung des Phosphats im zu enthärtenden Wasser. Je nach Strömungsmenge oder Strömungsgeschwindigkeit kann nämlich die Verweilzeit des zu enthärtenden Wassers auf dem Trimagnesiumphosphat kontrolliert und je nach Bedarf eingestellt werden. Dies ist insbesondere bei der Enthärtung von Warmwasser von Vorteil.

Falls im Einzelfall eine hohe Konzentration von Phosphat im zu enthärtenden Wasser gewünscht wird, kann das Trimagnesiumphosphat anodisch gelöst werden, indem eine entsprechende Stromzufuhr über Elektroden erfolgt.

Das Trimagnesiumphosphat kann direkt in dem Gefäß, welches das zu behandelnde Wasser aufnimmt, enthalten sein. Es kann aber auch in einem separaten Behälter, bspw. in Form einer Kartusche, aufgenommen sein. Dadurch wird die Handhabung erleichtert.

Das verwendete Trimagnesiumphosphat entzieht sich normalerweise der Granulierung. Beim Versuch, die Substanz zu pressen oder zu granulieren, erhält man bei Kontakt mit Wasser nur eine teigige Masse. Trimagnesiumphosphat wird deswegen bisher nur in Pulverform angeboten. Zur Bereitstellung des Trimagnesiumphosphat in Form eines Granulats wird eine Lösung von Trimagnesiumphosphat (bspw. in einer Säure) auf einen geeigneden Keim, bspw. ein Sandkorn aufgesprüht und getrocknet. Beim Trocknen fällt das Trimagnesiumphosphat auf dem Keim aus. Damit steht ein Granulat zur Verfügung, bei dem die Körner eine Oberfläche aus Trimagnesiumphosphat und einen Kern aus einer Fremdsubstanz aufweisen. Da, wie bereits erwähnt, das Trimagnesiumphosphat nur sehr langsam verbraucht wird, ist ein derartiges Granulat völlig ausreichend, um das erfindungsgemäße Ziel zu erreichen. Auf an sich bekannte Weise kann bspw. in einem Siebturm eine Fraktionierung vorgenommen werden, um eine geeignete Körnung zu erreichen.

Die vorliegende Erfindung eignet sich zur Enthärtung von Wässern aller Art, ist aber besonders vorteilhaft bei der Enthärtung von Trink- und Brauchwasser im Haushalt (Hauswasserinstallation) geeignet.

Im Folgenden wird die Erfindung anhand zweier in der Zeichnung schematisch dargestellten Ausführungsbeispiele näher erläutert. Es zeigen
- Fig. 1: ein erstes Ausführungsbeispiel einer erfindungsgemäßen Vorrichtung mit vertikaler Durchströmung in schematischer, nicht maßstabsgetreuer Darstellung;
- Fig. 2: ein zweites Ausführungsbeispiel einer erfindungsgemäßen Vorrichtung mit horizontaler Durchströmung in schematischer, nicht maßstabsgetreuer Darstellung.

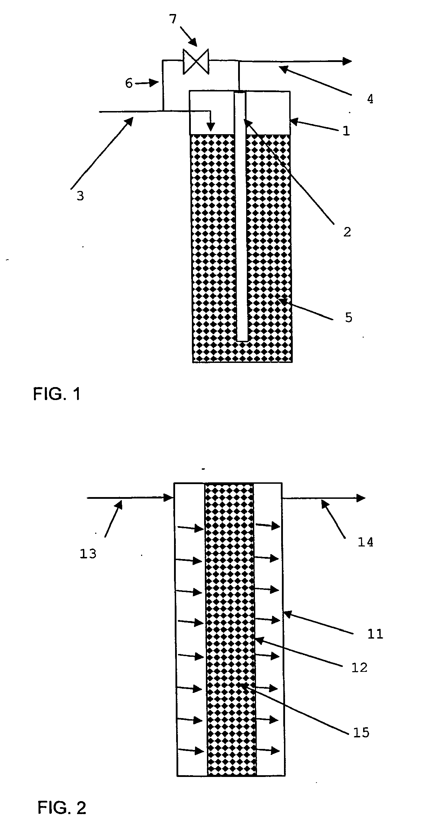

Figur 1 zeigt ein erstes Ausführungsbeispiel einer erfindungsgemäßen Vorrichtung. Ein Behälter 1 enthält ein Festbett 5 aus Trimagnesiumphosphat in gekörnter Form. In das Festbett 5 ragt ein Mittelrohr 2. Neben dem Mittelrohr 2 mündet eine Zulaufleitung 3 für das zu enthärtende Wasser. Aus dem Mittelrohr 2 tritt eine Ablaufleitung 4 für das enthärtete Wasser aus. Eine Bypassleitung 6 mit einem Ventil 7 verbindet die Zulaufleitung 3 und die Ablaufleitung 4.

Beim erfindungsgemäßen Betrieb der Vorrichtung strömt das zu enthärtende Wasser über die Zulaufleitung 3 in den Behälter 1. Mit dem Ventil 7 kann die Bypassleitung 6 geschlossen oder teilweise geöffnet werden, so dass der durch das Festbett 5 geleitete Volumenstrom reguliert werden kann. Das über die Zulaufleitung 3 in den Behälter 1 einströmende Wasser durchströmt das Festbett 5. Auf Grund der geringen Löslichkeit von Trimagnesiumphosphat im Wasser stellt sich im vorbei fließenden Wasser beim Durchströmen des Festbetts 5 eine Konzentration zwischen 0,1 und 0,5 ppm Phosphat im zu enthärtenden Wasser ein. Das mit Phosphat angereicherte Wasser strömt durch das Mittelrohr 2 in die Ablaufleitung 4. Das Festbett 5 wird also vertikal durchströmt.

In einer weiteren, in Figur 2 dargestellten Variante der erfindungsgemäßen Vorrichtung befindet sich in einem Gefäß 11 ein Behälter 12, bspw. eine Kartusche, in welcher eine Schüttung 15 von Trimagnesiumphosphat aufgenommen ist. Eine Zulaufleitung 13 für das zu enthärtende Wasser mündet in das Gefäß 11 und eine Ablaufleitung 14 für das enthärtete Wasser tritt aus dem Gefäß 11 aus.

Beim erfindungsgemäßen Betrieb strömt das zu enthärtende Wasser durch die Zulaufleitung 13 in das Gefäß 11 und durchströmt horizontal den Behälter 12, in welchem die Schüttung 15 aufgenommen ist. Das Wasser wird beim Durchströmen des Behälters 12 mit Phosphat angereichert und verlässt über die Ablaufleitung 14 das Gefäß 11. Die Schüttung 15 wird in diesem Fall also horizontal durchströmt.

## Patentansprüche

1. Verwendung von Trimagnesiumphosphat zur Wasserenthärtung von Trink- und Brauchwasser im Haushalt, wobei Trimagnesiumphosphat in Form eines Feststoffes als Inhibitor zur Verzögerung der Ausfällung eines Härtebildners dem zu enthärtenden Wasser zugesetzt wird.

2. Verwendung nach Anspruch 1, **dadurch gekennzeichnet, dass** das Trimagnesiumphosphat in Form eines Granulats verwendet wird.

3. Verwendung nach Anspruch 2, **dadurch gekennzeichnet, dass** ein Granulat mit einer Körnung von 0,2 bis 5,0 mm verwendet wird.

4. Verwendung nach einem der Ansprüche 1 bis 3, **dadurch gekennzeichnet, dass** das Trimagnesiumphosphat in Form einer Schüttung (15) verwendet wird.

5. Verwendung nach einem der Ansprüche 1 bis 3, **dadurch gekennzeichnet, dass** das Trimagnesiumphosphat in Form eines Festbetts (5) verwendet wird.

6. Verwendung nach einem der vorhergehenden Ansprüche, **dadurch gekennzeichnet, dass** das Trimagnesiumphosphat zumindest von einem Teilstrom des zu enthärtenden Wassers durchströmt wird.

7. Verwendung nach einem der vorgehenden Ansprüche, **dadurch gekennzeichnet, dass** zusätzlich eine elektrische Stromzufuhr erfolgt, um das Trimagnesiumphosphat anodisch zu lösen.

8. Verwendung nach einem der vorhergehenden Ansprüche, **dadurch gekennzeichnet, dass** das Trimagnesiumphosphat in einem Behälter (1, 12) bereitgestellt wird.

9. Verwendung nach Anspruch 8, **dadurch gekennzeichnet, dass** als Behälter eine Kartusche (12) bereitgestellt wird, welche in einem Gefäß (11) angeordnet wird.

## Claims

1. Use of trimagnesium phosphate for softening drinking water and service water in the home, wherein trimagnesium phosphate is added in the form of a solid to the water which is to be softened as inhibitor for retarding the precipitation of a hardness constituent.

2. Use according to Claim 1, **characterized in that** the trimagnesium phosphate is used in the form of granules.

3. Use according to Claim 2, **characterized in that** granules having a grain size of 0.2 to 5.0 mm are used.

4. Use according to any one of Claims 1 to 3, **characterized in that** the trimagnesium phosphate is used in the form of a dumped bed (15).

5. Use according to any one of Claims 1 to 3, **characterized in that** the trimagnesium phosphate is used in the form of a fixed bed (5).

6. Use according to any one of the preceding claims, **characterized in that** at least a substream of the water which is to be softened flows through the trimagnesium phosphate.

7. Use according to any one of the preceding claims, **characterized in that** in addition an electric current is supplied in order to dissolve the trimagnesium phosphate anodically.

8. Use according to any one of the preceding claims, **characterized in that** the trimagnesium phosphate is provided in a container (1, 12).

9. Use according to Claim 8, **characterized in that** the container provided is a cartridge (12) which is arranged in a vessel (11).

## Revendications

1. Utilisation de phosphate trimagnésique pour l'adoucissement d'eau potable et non potable domestique, le phosphate trimagnésique étant ajouté à l'eau à adoucir sous forme d'un solide comme inhibiteur pour le ralentissement de la précipitation d'un agent de dureté.

2. Utilisation selon la revendication 1, **caractérisée en ce que** le phosphate trimagnésique est utilisé sous forme d'un granulat.

3. Utilisation selon la revendication 2, **caractérisée en ce qu'**on utilise un granulat présentant une granulométrie de 0,2 à 5,0 mm.

4. Utilisation selon l'une quelconque des revendications 1 à 3, **caractérisée en ce que** le phosphate trimagnésique est utilisé sous forme d'un matériau en vrac (15).

5. Utilisation selon l'une quelconque des revendications 1 à 3, **caractérisée en ce que** le phosphate trimagnésique est utilisé sous forme d'un lit fixe (5).

6. Utilisation selon l'une quelconque des revendications précédentes, **caractérisée en ce que** le phosphate trimagnésique est traversé au moins par un flux partiel de l'eau à adoucir.

7. Utilisation selon l'une quelconque des revendications précédentes, **caractérisée en ce qu'**en outre, une alimentation en courant électrique est présente pour dissoudre le phosphate trimagnésique à l'anode.

8. Utilisation selon l'une quelconque des revendications précédentes, **caractérisée en ce que** le phosphate trimagnésique est préparé dans un récipient (1, 12).

9. Utilisation selon la revendication 8, **caractérisée en ce qu'**on met à disposition comme récipient une cartouche (12) qui est disposée dans une cuve (11).
